# EUROPÄISCHE PATENTSCHRIFT

(11) **EP 3 953 211 B1**
(45) Veröffentlichungstag und Bekanntmachung des Hinweises auf die Patenterteilung: **05.10.2022**
(21) Anmeldenummer: 20717116.6
(22) Anmeldetag: 30.03.2020
(51) Int. Cl.: B60N 2/16, B60N 2/02

(54) **FAHRZEUGSITZ**
VEHICLE SEAT
SIÈGE DE VÉHICULE

(30) Priorität: 08.04.2019 DE 102019109214; 20.08.2019 DE 102019122310
(43) Veröffentlichungstag der Anmeldung: 16.02.2022
(73) Patentinhaber: Adient US LLC, Plymouth, MI 48170 (US)
(72) Erfinder: ANDO, Michal, 91101 Trencin (SK); CEVIK, Murat, 51103 Koeln (DE); CHIRAYATH, Pinto Thomas, 42799 Leichlingen (DE); PRUEFER, Marco, 51789 Lindlar (DE); SIMEONIDIS, Antonios, 42287 Wuppertal (DE)
(74) Vertreter: Liedhegener, Ralf
(86) Internationale Anmeldenummer: PCT/EP2020/058888
(87) Internationale Veröffentlichungsnummer: WO 2020/207835

(56) Entgegenhaltungen:
- WO-A1-2012/049871
- DE-A1- 2 802 222
- DE-A1- 10 042 851
- DE-A1-102017 100 182
- DE-A1-102017 206 994
- DE-A1-102018 115 499
- JP-A- S58 185 327
- KR-A- 20090 047 950
- US-A1- 2007 216 210

## Beschreibung

Die Erfindung betrifft einen Fahrzeugsitz mit einer Höheneinstellkinematik, die Höheneinstellkinematik aufweisend auf jeder von zwei in einer Querrichtung versetzt zueinander angeordneten Sitzseiten jeweils eine Viergelenkanordnung und einen Einstellarm, jede der beiden Viergelenkanordnungen jeweils aufweisend eine Basis, ein Seitenteil, eine vordere Schwinge und eine hintere Schwinge als Getriebeglieder der Viergelenkanordnung, wobei ein erstes Drehgelenk die Basis schwenkbar mit der hinteren Schwinge verbindet, ein zweites Drehgelenk die hintere Schwinge schwenkbar mit dem Seitenteil verbindet, ein drittes Drehgelenk das Seitenteil schwenkbar mit der vorderen Schwinge verbindet, und ein viertes Drehgelenk die vordere Schwinge schwenkbar mit der Basis verbindet, wobei jeder der beiden Viergelenkanordnungen jeweils mittels einem der beiden Einstellarme einstellbar ist.

### Stand der Technik

Die DE 100 42 851 A1 offenbart ein höhenverstellbares Untergestell eines Kraftfahrzeugsitzes mit einem linken und einem rechten Schienenpaar einer Längsverstellvorrichtung und mit einem linken und mit einem rechten Seitenteil, die jeweils über eine hintere und eine vordere Schwinge mit der zugehörigen Sitzschiene des Schienenpaars gelenkverbunden sind, wobei ein Einstellarm vorgesehen ist, der mit einem unteren Endbereich an einem Gelenkpunkt einer hinteren Schwinge an der zugehörigen Sitzschiene angelenkt ist und der in Nähe seines oberen Endes in einer Arretiervorrichtung lösbar festgelegt ist, die am zugehörigen Seitenteil befestigt ist.

Aus der WO 2014/114585 A1 ist ein Höheneinsteller für einen Fahrzeugsitz bekannt, umfassend mindestens eine Schwinge, welche relativ zu einem Seitenteil um eine Anlenkstelle schwenkbar ist, sowie einen ein Zahnteil aufweisenden Einstellarm, welcher um eine Lagerstelle schwenkbar ist, sowie ein um eine Drehachse drehbares Ritzel, welches zur Höheneinstellung mit dem Zahnteil zusammenwirkt. Das Zahnteil ist in einem der Anlenkstelle der Schwinge abgewandten Langloch des Einstellarms ausgebildet.

Aus der DE 10 2017 206 994 A1 ist ein Fahrzeugsitz bekannt, mit einer Antriebsvorrichtung zum Antrieb einer Höheneinstellkinematik des Fahrzeugsitzes, einem Einstellarm zur Betätigung der Höheneinstellkinematik, und einer Spannvorrichtung, die Antriebsvorrichtung aufweisend ein um eine Ritzeldrehachse drehbares Ritzel, das mit einem Zahnsegment des Einstellarms in Zahneingriff ist, wobei die Spannvorrichtung den Einstellarm derart vorspannt, dass das Zahnsegment in Richtung des Ritzels vorgespannt ist.

Aus der DE 10 2015 212 823 B3 ist ein Getriebemotor mit einem Elektromotor und einem Untersetzungsgetriebe bekannt, wobei das Untersetzungsgetriebe ein Getriebegehäuse und eine aus dem Getriebegehäuse herausragende Ausgangswelle aufweist, mit deren einem Ende ein Abtriebsritzel, insbesondere zum Antrieb einer Höheneinstellkinematik für einen Fahrzeugsitz, drehfest verbunden ist.

### Aufgabe

Der Erfindung liegt die Aufgabe zu Grunde, einen Fahrzeugsitz der eingangs genannten Art zu verbessern, insbesondere Kosten und Gewicht zu reduzieren.

### Lösung

Diese Aufgabe wird erfindungsgemäß gelöst durch einen Fahrzeugsitz mit einer Höheneinstellkinematik, die Höheneinstellkinematik aufweisend auf jeder von zwei in einer Querrichtung versetzt zueinander angeordneten Sitzseiten jeweils eine Viergelenkanordnung und einen Einstellarm, jede der beiden Viergelenkanordnungen jeweils aufweisend eine Basis, ein Seitenteil, eine vordere Schwinge und eine hintere Schwinge als Getriebeglieder der Viergelenkanordnung, wobei ein erstes Drehgelenk die Basis schwenkbar mit der hinteren Schwinge verbindet, ein zweites Drehgelenk die hintere Schwinge schwenkbar mit dem Seitenteil verbindet, ein drittes Drehgelenk das Seitenteil schwenkbar mit der vorderen Schwinge verbindet, und ein viertes Drehgelenk die vordere Schwinge schwenkbar mit der Basis verbindet, wobei jeder der beiden Viergelenkanordnungen jeweils mittels einem der beiden Einstellarme einstellbar ist, wobei eine Antriebsvorrichtung, aufweisend genau einen Getriebemotor, die beiden Einstellarme antreibt, wobei wenigstens eine der beiden vorderen Schwingen ein Langloch aufweist, in dem ein Zapfen angeordnet ist, wobei der Zapfen und das Langloch einen Endanschlag für die Höheneinstellkinematik bilden, und/oder wenigstens eine der beiden hinteren Schwingen ein Langloch aufweist, in dem ein Anschlagbolzen angeordnet ist, wobei der Anschlagbolzen und das Langloch einen Endanschlag für die Höheneinstellkinematik bilden.

Dadurch, dass eine Antriebsvorrichtung, aufweisend genau einen Getriebemotor, die beiden Einstellarme antreibt, ist ein höhenverstellbarer Fahrzeugsitz mit beidseitig angeordneten Einstellarmen zur Verfügung gestellt, der nur einem Antriebsmotor benötigt.

Vorteilhafte Ausgestaltungen, welche einzeln oder in Kombination miteinander eingesetzt werden können, sind Gegenstand der Unteransprüche.

Jeder der beiden Einstellarme kann einerseits schwenkbar mit einem der Koppelglieder der zugeordneten Viergelenkanordnung, insbesondere der jeweils zugeordneten hinteren Schwinge, verbunden sein. Jeder der beiden Einstellarme kann andererseits jeweils ein Zahnsegment aufweisen, das mit jeweils einem Ritzel von zwei Ritzeln der Antriebsvorrichtung in Zahneingriff ist. Die beiden Ritzel sind vorzugsweise um eine Ritzeldrehachse drehbar von dem Getriebemotor antreibbar. Die Ritzeldrehachse ist vorzugsweise ortsfest und zu einem weiteren Getriebeglied der Viergelenkanordnung, insbesondere zu dem Seitenteil, angeordnet.

Der Getriebemotor kann näher an einer der beiden Sitzseiten als an der anderen der beiden Sitzseiten angeordnet sein. Der Getriebemotor kann auf einer der beiden Sitzseiten angeordnet sein. Der Getriebemotor kann fest mit einem Seitenteil verbunden sein. Der Getriebemotor kann fest mit einem Antriebsgehäuse verbunden sein.

Das Antriebsgehäuse kann eine Gehäuseplatte aufweisen. Das Antriebsgehäuse kann eines der beiden Ritzel lagern. An einem ersten Ende einer Ausgangswelle des Getriebemotors kann eines der beiden Ritzel befestigt sein. Mit einem zweiten Ende der Ausgangswelle kann ein Übertragungsrohr zur Übertragung eines Drehmoments von dem Getriebemotor zu dem anderen der beiden Ritzel drehfest verbunden sein. Eines der beiden Ritzel kann in einem ersten Antriebsgehäuse angeordnet sein. Das andere der beiden Ritzel kann in einem zweiten Antriebsgehäuse angeordnet sein. Eines der beiden Ritzel kann in dem ersten Antriebsgehäuse gelagert sein. Das andere der beiden Ritzel kann in dem zweiten Antriebsgehäuse gelagert sein.

Das erste Antriebsgehäuse und/oder das zweite Antriebsgehäuse kann eine Gehäuseplatte aufweisen. Die Gehäuseplatte kann, insbesondere mittels mehrerer Bolzen, beispielsweise Schrauben, in einem Abstand zu einem Seitenteil an dem Seitenteil befestigt sein.

Einer der beiden Einstellarme, insbesondere ein Zahnsegment dieses Einstellarms, kann wenigstens teilweise durch das erste Antriebsgehäuse hindurch verlaufen, und/oder der andere der beiden Einstellarme, insbesondere ein Zahnsegment dieses Einstellarms, kann wenigstens teilweise durch das zweite Antriebsgehäuse hindurch verlaufen.

Wenigstens eine der beiden vorderen Schwingen kann wenigstens teilweise in einem der beiden Antriebsgehäuse angeordnet sein. Ein Seitenteil kann Bestandteil des Antriebsgehäuses sein. Eine vordere Schwinge kann zwischen einer Gehäuseplatte und einem Seitenteil angeordnet sein. Ein Einstellarm kann zwischen einer Gehäuseplatte und einem Seitenteil angeordnet sein. Dadurch können die vordere Schwinge und der Einstellarm zwischen der Gehäuseplatte und dem Seitenteil im Crashfall nicht ausknicken.

Wenigstens eine der beiden vorderen Schwingen kann ein Langloch aufweisen, in dem ein Zapfen, insbesondere ein Zapfen des Ritzels, angeordnet ist, wobei der Zapfen und das Langloch einen Endanschlag für die Höheneinstellkinematik bilden. Dadurch kann auf einen Endanschlag an den Einstellarmen verzichtet werden.

Wenigstens eine der beiden hinteren Schwingen kann ein Langloch aufweisen, in dem ein Anschlagbolzen angeordnet ist. Der Anschlagbolzen ist vorzugsweise an der Basis befestigt, insbesondere an einem Adapter der Basis befestigt. Der Anschlagbolzen und das Langloch können einen Endanschlag für die Höheneinstellkinematik bilden.

Die Antriebsvorrichtung kann eine manuelle Antriebsvorrichtung sein. Die Antriebsvorrichtung kann ein manuell antreibbares Ritzel aufweisen, das in Zahneingriff mit dem Zahnsegment ist. Eine solche Antriebsvorrichtung ist beispielsweise aus der DE 10 2009 014 651 A1 bekannt.

Die Antriebsvorrichtung kann eine elektrifizierte Antriebsvorrichtung sein, wobei das Ritzel Bestandteil einer elektromotorischen Antriebsvorrichtung ist, wie diese beispielsweise aus der DE 197 09 852 A1 bekannt ist.

Eine Drehung der beiden Ritzel um eine gemeinsame Ritzeldrehachse verursacht eine Relativbewegung zwischen den Ritzeln und den Einstellarmen. Insbesondere verursacht die Drehung des Ritzels um die Ritzeldrehachse eine Relativbewegung zwischen den Einstellarmen und einem weiteren Bauteil des Fahrzeugsitzes, an dem die Antriebsvorrichtung angeordnet ist, insbesondere einem Sitzrahmen.

Die Einstellarme bewirken vorzugsweise neben dem Antrieb der Viergelenkanordnung vorzugsweise ein Blockieren der Viergelenkanordnung in einem nicht angetriebenen Zustand. Vorzugsweise ist dazu die Antriebsvorrichtung selbsthemmend ausgelegt, so dass das Ritzel nicht gedreht werden kann, wenn der Elektromotor ausgeschaltet ist (im Falle einer elektrifizierten Antriebsvorrichtung), oder ein Betätigungshebel unbetätigt bleibt (im Falle einer manuellen Antriebsvorrichtung).

Ein dem Zahnsegment abgewandter Bereich des Einstellarms ist vorzugsweise exzentrisch zu den Drehgelenken an einem der Koppelglieder angelenkt, wobei die Antriebsvorrichtung an einem anderen der Koppelglieder angelenkt ist. Der dem Zahnsegment abgewandte Bereich des Einstellarms kann an der hinteren Schwinge angelenkt sein. Die Antriebsvorrichtung sowie die Spannvorrichtung können an dem Seitenteil befestigt sein.

Zusammenfassend und mit anderen Worten ausgedrückt, ist durch die Erfindung ein Höhenversteller-Sitzgestell mit Zahnstangensegmenten und nur einem Antriebsmotor und Sandwich Anordnung einer Schwinge und des Zahnstangensegmentes zur Verfügung gestellt. Eine Höhenverstellung des Sitzgestells mit einer Zahnstange auf jeder Seite, aber nur einem Antriebsmotor und einer Übertragungstange zum gegenüberliegenden Zahnstangenantrieb, ist bereitgestellt. Des Weiteren ermöglicht eine Sandwichbauweise Endanschläge in die vorderen und/oder hinteren Schwingen zu integrieren. An dem Antriebsmotor befinden sich zwei Schnittstellen, eine Schnittstelle (Zahnrad) treibt direkt die Zahnstange an. Die zweite Schnittstelle am Antriebsmotor ist durch einen Vielzahnantrieb gekennzeichnet, wodurch das Drehmoment mittels eines Rohres auf die gegenüberliegende Seite zu dem zweiten Ritzel/der zweiten Zahnstange übertragen wird. Die Anordnung der vorderen und hinteren Schwingen ermöglicht eine platzsparende Bauweise mit integrierten Endanschlägen.

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine schematisierte Seitenansicht eines erfindungsgemäßen Fahrzeugsitzes,

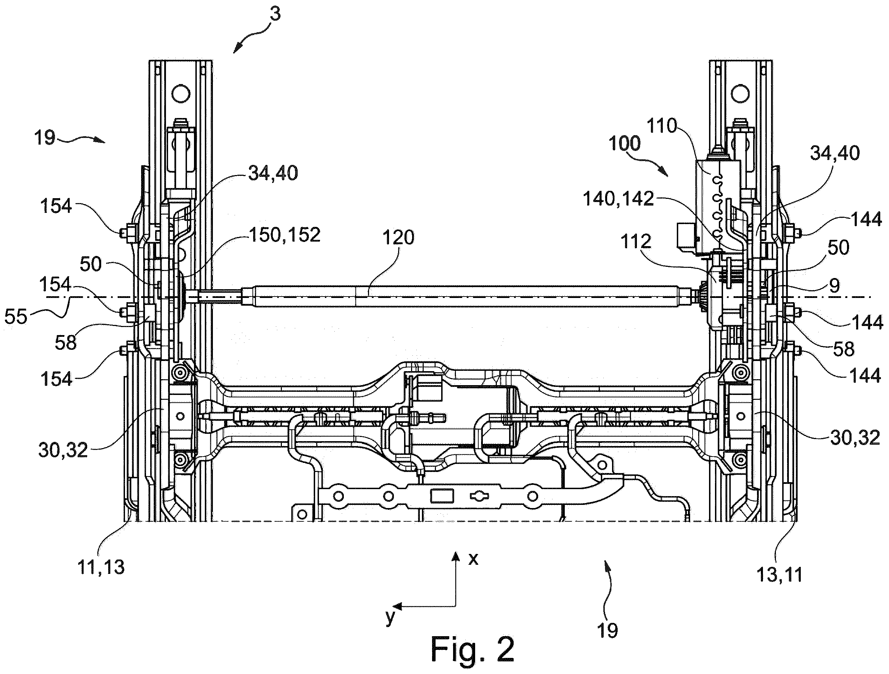

- Fig. 2:: ausschnittsweise eine Draufsicht auf eine Sitzunterbaustruktur des erfindungsgemäßen Fahrzeugsitzes,

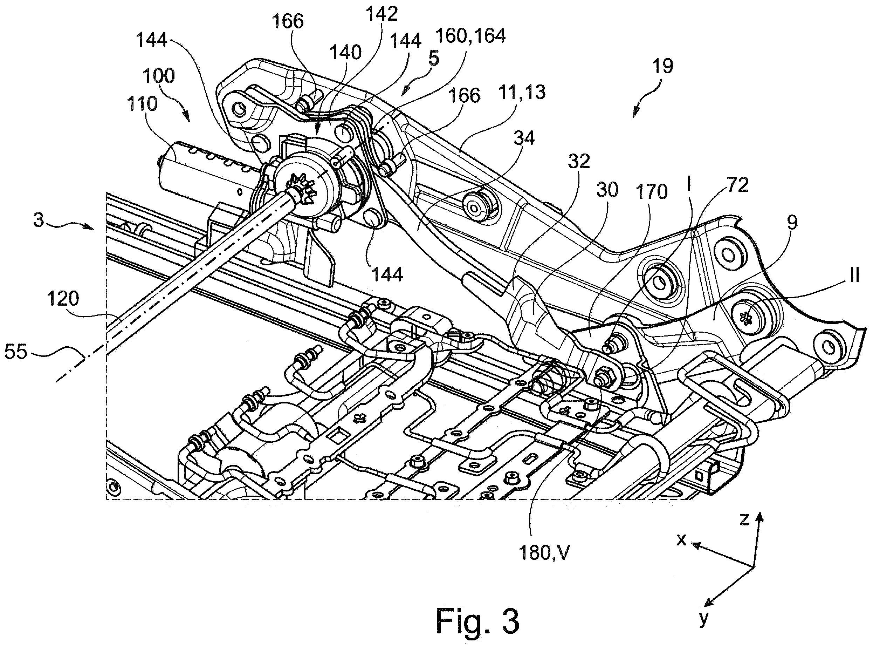

- Fig. 3:: ausschnittsweise eine perspektivische Ansicht auf die Sitzunterbaustruktur des erfindungsgemäßen Fahrzeugsitzes,

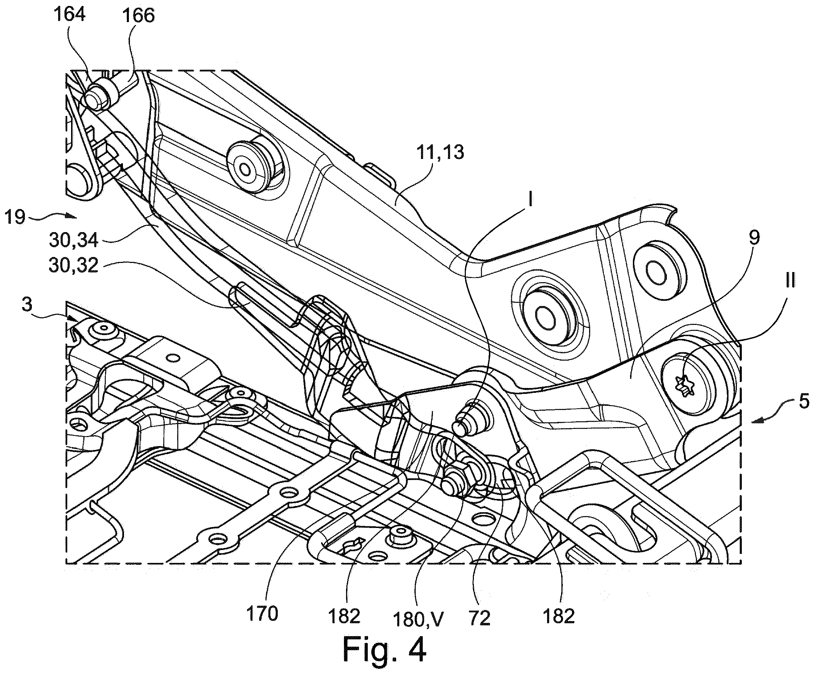

- Fig. 4:: einen vergrößerten und teilweise transparent dargestellten Ausschnitt aus Fig. 3,

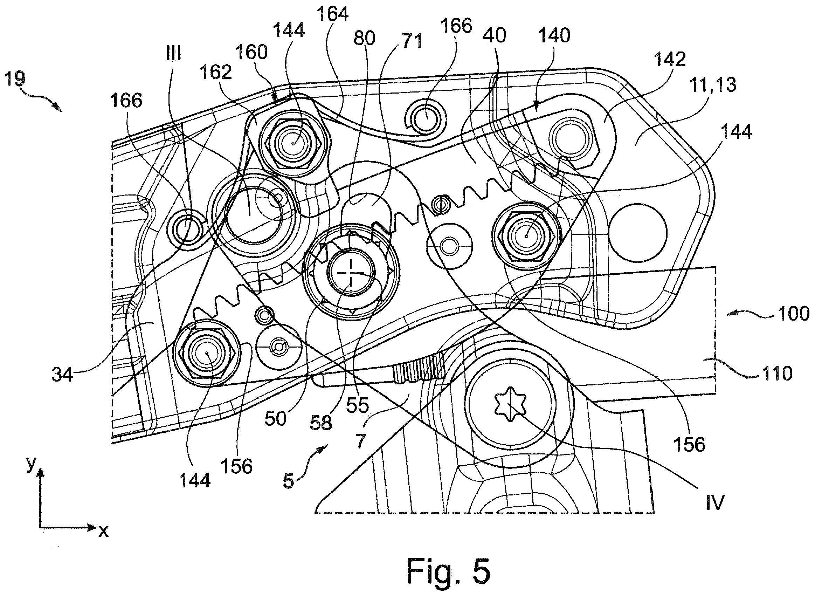

- Fig. 5:: eine teilweise transparent dargestellte Seitenansicht auf ein Detail eines vorderen Bereichs der Sitzunterbaustruktur, und

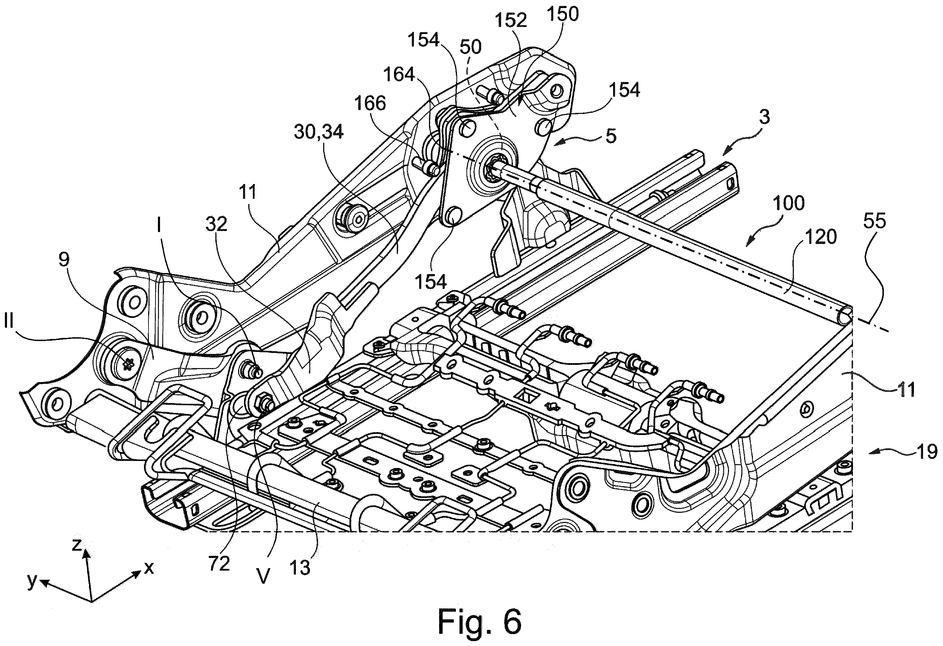

- Fig. 6:: ausschnittsweise eine perspektivische Ansicht auf die Sitzunterbaustruktur des erfindungsgemäßen Fahrzeugsitzes aus einer gegenüber Fig. 3 abweichenden Blickrichtung.

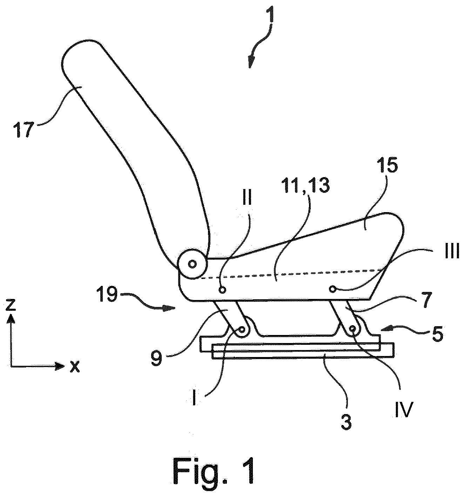

Ein in Figur 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Rückenlehne 17 und wie üblich in Fahrtrichtung ausgerichtet ist.

Der erfindungsgemäße Fahrzeugsitz 1 kann jedoch auch in abweichender Ausrichtung, beispielsweise quer zur Fahrtrichtung verbaut werden. Soweit nicht abweichend beschrieben, ist der Fahrzeugsitz 1 spiegelsymmetrisch zu einer senkrecht zur Querrichtung y verlaufenden Ebene aufgebaut.

Der Fahrzeugsitz 1 ist höheneinstellbar, das heißt ein Abstand in Vertikalrichtung z zwischen einer Sitzfläche des Fahrzeugsitzes 1 und einem Fahrzeugboden lässt sich einstellen, insbesondere um den Fahrzeugsitz 1 an die Körpergröße eines Insassen anzupassen. Der Fahrzeugsitz 1 ist mit einer Basis 3, beispielsweise zwei Sitzschienenpaaren, am Fahrzeugboden des Kraftfahrzeugs befestigbar. Eine Höheneinstellkinematik 5 des Fahrzeugsitzes 1 weist in Querrichtung y betrachtet auf beiden Sitzseiten je eine Viergelenkanordnung (I, II, III, IV) auf, welche jeweils aus der Basis 3, einer vorderen Schwinge 7, einer hinteren Schwinge 9 und einem Seitenteil 11 eines Sitzrahmens 13 gebildet ist, die jeweils mittels Drehgelenken I, II, III, IV miteinander verbunden sind. Beidseitig verbindet jeweils ein erstes Drehgelenk I die Basis 3 schwenkbar mit der jeweils hinteren Schwinge 9. Auf beiden Sitzseiten verbindet jeweils ein zweites Drehgelenk II die jeweils hintere Schwinge 9 schwenkbar mit dem jeweiligen Seitenteil 11. Auf beiden Sitzseiten verbindet jeweils ein drittes Drehgelenk III das Seitenteil 11 schwenkbar mit der jeweils vorderen Schwinge 7. Auf beiden Sitzseiten verbindet jeweils ein viertes Drehgelenk IV jeweils die vordere Schwinge 7 schwenkbar mit der Basis 3. Der Sitzrahmen 13 umfasst in an sich bekannter Weise auf beiden Sitzseiten je ein Seitenteil 11, vorliegend ein Sitzrahmenseitenteil. Die Drehgelenke I, II, III, IV ermöglichen jeweils eine Drehbewegung um jeweils eine zur Querrichtung y parallele Achse.

Der Fahrzeugsitz 1 umfasst eine Sitzstruktur und mehrere von der Sitzstruktur getragene Polsterteile, die Polsterteile umfassend Schaumteile und Polsterbezüge, insbesondere aus Stoff oder Leder. Die Rückenlehne 17 weist insbesondere eine Rückenlehnenstruktur auf. Die Rückenlehne 17 ist mittels zweier in den Figuren nicht dargestellter Beschläge schwenkbar an einem Sitzunterbau 19 befestigt. Der Sitzunterbau 19 weist insbesondere eine Sitzunterbaustruktur auf. Die Rückenlehnenstruktur und die Sitzunterbaustruktur bilden im Wesentlichen die Sitzstruktur. Die Sitzunterbaustruktur umfasst die Basis 3, die Höheneinstellkinematik 5 und den Sitzrahmen 13.

Mittels der Höheneinstellkinematik 5 ist die Höhe des Sitzkissens 15 und vorliegend zugleich der Rückenlehne 17 des Fahrzeugsitzes 1 über dem Fahrzeugboden (und damit über der Basis 3) einstellbar.

Zum Antreiben und zum Sperren der Höheneinstellkinematik 5 ist auf den beiden Sitzseiten jeweils ein zwischen der jeweiligen hinteren Schwinge 9 und dem jeweiligen Seitenteil 11 wirksamer Einstellarm 30 angeordnet. Die Einstellarme 30 wirken kinematisch jeweils wie eine längenveränderbare Koppel zwischen der zugehörigen hinteren Schwinge 9 und dem jeweiligen Seitenteil 11. Ein jeweils erstes Ende der Einstellarme 30 ist exzentrisch zu dem ersten Drehgelenk I der Viergelenkanordnung (I, II, III, IV) in einem jeweils fünften Drehgelenk V an der zugeordneten hinteren Schwinge 9 angelenkt. Ein jeweils zweites Ende der Einstellarme 30 weist ein Zahnsegment 40 auf. Die Zahnsegmente 40 sind jeweils in der Art einer gekrümmten Zahnstange ausgebildet. Die Einstellarme 30 bestehen vorliegend beide aus jeweils einem ersten Armteil 32 und einem fest mit dem ersten Armteil 32 verbundenen zweiten Armteil 34. An dem jeweils zweiten Armteil 34 ist das Zahnsegment 40 des jeweiligen Einstellarms 30 ausgebildet.

Die wirksame Länge des Einstellarms 30 bestimmt die Einstellung der zugehörigen Viergelenkanordnung (I, II, III, IV) und somit den Abstand in Vertikalrichtung z zwischen der Sitzfläche des Fahrzeugsitzes 1 und dem Fahrzeugboden. Ein Verändern der wirksamen Länge der Einstellarme 30 betätigt somit die Höheneinstellkinematik 5.

Die wirksame Länge der Einstellarme 30 lässt sich verändern, indem jeweils ein Zahnsegment 40 mit jeweils einem von zwei Ritzeln 50 einer an dem Sitzrahmen 13 befestigten Antriebsvorrichtung 100 in Zahneingriff sind. Eine Drehung der Ritzel 50 bewirkt eine Verschiebung der Zahnsegmente 40 relativ zu dem jeweils zugeordneten Ritzel 50 und somit relativ zum Sitzrahmen 13, wodurch sich die (kinematisch) wirksame Länge des Einstellarms 30 ändert.

Der Einstellarm 30 kann in Abwandlungen des Ausführungsbeispiels auch eine einteilige, gerade oder gekrümmte Zahnstange sein.

Die Antriebsvorrichtung 100 weist genau einen elektrischen Getriebemotor 110 auf, der die beiden um eine gemeinsame Ritzeldrehachse 55 drehbar gelagerten Ritzel 50 antreibt. Die Ritzeldrehachse 55 verläuft parallel zur Querrichtung y. Die Antriebsvorrichtung 100 entspricht beispielsweise einer aus der DE 197 09 852 A1 bekannten Antriebsvorrichtung. Der Getriebemotor 110 ist an einem ersten Antriebsgehäuse 140 befestigt, insbesondere verschraubt. Das erste Antriebsgehäuse 140 ist an einem der beiden Seitenteile 11 des Sitzrahmens 13 befestigt, vorzugsweise mittels mehrerer Schrauben an einem der beiden Seitenteile 11 angeschraubt.

Das erste Antriebsgehäuse 140 weist eine erste Gehäuseplatte 142 auf, die mittels dreier, vorliegend als Stufenbolzen ausgebildeter, Bolzen 144 in einem Abstand zum Seitenteil 11 an diesem befestigt ist. Der dem ersten Antriebsgehäuse 140 zugeordnete Einstellarm 30 ist in Querrichtung y zwischen der ersten Gehäuseplatte 142 und dem Seitenteil 11, an dem das erste Antriebsgehäuse 140 befestigt ist, beweglich angeordnet.

Der Getriebemotor 110 ist selbsthemmend ausgelegt, so dass in einem unbestromten Zustand des Elektromotors (des Getriebemotors 110) die Ritzel 50 über die Zahnsegmente 40 nicht gedreht werden können und somit die Höheneinstellkinematik 5 blockiert ist.

In einer Abwandlung des Ausführungsbeispiels sind die Ritzel 50 Bestandteil einer mechanischen Antriebsvorrichtung, wie beispielsweise aus der DE 10 2009 014 651 A1 bekannt.

Wird die Antriebsvorrichtung 100 angetrieben, schwenkt diese die beiden Einstellarme 30, die Seitenteile 11 und die hinteren Schwingen 9 relativ zueinander, so dass die Höheneinstellkinematik 5 betätigt wird.

Der Getriebemotor 110 weist eine mit der Ritzeldrehachse 55 fluchtende Ausgangswelle auf, die beidseits aus einem Getriebegehäuse 112 herausragt. Einerseits ist an der Ausgangswelle dasjenige Ritzel 50 befestigt, welches auf der Sitzseite, an der der Getriebemotor 110 mit einem der beiden Seitenteile 11 verschraubt ist, mit dem zugordneten Zahnsegment 40 in Zahneingriff ist. Andererseits weist die Ausgangswelle des Getriebemotors 110 eine umlaufende Außenverzahnung auf, auf die eine komplementäre Innenverzahnung eines Übertragungsrohrs 120 aufgesteckt ist.

Auf der dem Getriebemotor 110 abgewandten Sitzseite ist das Übertragungsrohr 120 drehfest mit dem anderen der beiden Ritzel 50 verbunden. Auf der dem Getriebemotor 110 abgewandten Sitzseite ist das Ritzel 50 in einem zweiten Antriebsgehäuse 150 gelagert.

Das zweite Antriebsgehäuse 150 weist eine zweite Gehäuseplatte 152 auf, die mittels dreier vorliegend als Stufenbolzen ausgebildeter Bolzen 154 in einem Abstand zum Seitenteil 11 an diesem befestigt ist. Der dem zweiten Antriebsgehäuse 150 zugeordnete Einstellarm 30 ist in Querrichtung y zwischen der zweiten Gehäuseplatte 152 und dem Seitenteil 11, an dem das zweite Antriebsgehäuse 150 befestigt ist, beweglich angeordnet.

Beide Antriebsgehäuse 140, 150 weisen jeweils eine Vorspanneinheit 160 auf, die einen Schieber 162 und einen mechanischen Kraftspeicher, vorliegend eine Feder 164 aufweisen. Die Feder 164 stützt sich einerseits an dem Schieber 162 und andererseits an mit dem Seitenteil 11 verbundenen Stützzapfen 166 ab. Der Schieber 162 weist eine Öffnung auf, die einen der Bolzen 144, 154 in sich aufnimmt. Der Schieber 162 ist dadurch begrenzt verschiebbar auf diesem Bolzen 144, 154 gelagert. Die Feder 164 spannt den Schieber 162 auf einer dem Ritzel 50 abgewandten Seite des Zahnsegments 40 derart gegen das Zahnsegment 40, dass freies Spiel zwischen den in Zahneingriff befindlichen Verzahnungen von Ritzel 50 und Zahnsegment 40 herausgestellt ist.

Jede der beide vorderen Schwingen 7 weist ein erstes Langloch 71 auf, das um das dritte Drehgelenk III gekrümmt ist. Jeweils ein auf den beiden Ritzeln 50 mit der Ritzeldrehachse 55 fluchtender Zapfen 58 greift in das zugeordnete erste Langloch 71 ein. Die Länge des ersten Langlochs 71 ist derart ausgelegt, dass der Zapfen 58 in einer obersten Einstellposition der Höheneinstellkinematik 5 an ein erstes Ende des ersten Langlochs 71 anläuft und in einer untersten Einstellposition der Höheneinstellkinematik 5 an ein zweites Ende des ersten Langlochs 71 anläuft. Dadurch bilden die Zapfen 58 und die die Zapfen 58 aufnehmenden ersten Langlöcher 71 erste Endanschläge 80 der Höheneinstellkinematik 5.

Zudem läuft jede der beide vorderen Schwingen 7 in der obersten Einstellposition der Höheneinstellkinematik 5 und in der untersten Einstellposition der Höheneinstellkinematik 5 jeweils an einen der Bolzen 144, 154 an. Dadurch bildet jeder der beiden vorderen Schwingen 7 mit den Bolzen 144, 154 zweite Endanschläge 156 der Höheneinstellkinematik 5. Die zweiten Endanschläge 156 der Höheneinstellkinematik 5 können parallel zu den ersten Endanschlägen 80 der Höheneinstellkinematik 5 wirken. Vorzugsweise sind aber im Normalgebrauch des Fahrzeugsitzes 1 nur die ersten Endanschläge 80 oder nur die zweiten Endanschläge 156 wirksam. Die jeweils anderen Endanschläge 80, 156 geraten dann erst im Crashfall nach einer elastischen oder plastischen Verformung des Fahrzeugsitzes 1 in Anschlag.

Die beiden ersten Drehgelenke I sind jeweils an einem Adapter 170 der Basis 3 ausgebildet. Jeder der beide Adapter 170 weist ein zweites Langloch 72 auf, das um das erste Drehgelenk I gekrümmt ist. Jeweils ein an der hinteren Schwinge 9 befestigter Anschlagbolzen 180 greift in das zugeordnete zweite Langloch 72 ein. Die Länge des zweiten Langlochs 72 ist derart ausgelegt, dass jeder der beiden Anschlagbolzen 180 in einer obersten Einstellposition der Höheneinstellkinematik 5 an ein erstes Ende des zweiten Langlochs 72 anläuft und in einer untersten Einstellposition der Höheneinstellkinematik 5 an ein zweites Ende des zweites Langlochs 72 anläuft. Dadurch bilden die Anschlagbolzen 180 und die die Anschlagbolzen 180 aufnehmenden zweiten Langlöcher 72 dritte Endanschläge 182 der Höheneinstellkinematik 5.

Vorzugsweise sind aber im Normalgebrauch des Fahrzeugsitzes 1 nur die ersten Endanschläge 80 oder nur die zweiten Endanschläge 156 oder nur die dritten Endanschläge 182 wirksam. Die jeweils anderen Endanschläge 80, 156, 182 geraten dann erst im Crashfall nach einer elastischen oder plastischen Verformung des Fahrzeugsitzes 1 in Anschlag.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen, soweit sie den Schutzbereich der Ansprüche nicht verlassen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 3: Basis
- 5: Höheneinstellkinematik
- 7: vordere Schwinge
- 9: hintere Schwinge
- 11: Seitenteil
- 13: Sitzrahmen
- 15: Sitzkissen
- 17: Rückenlehne
- 19: Sitzunterbau
- 30: Einstellarm
- 32: erstes Armteil
- 34: zweites Armteil
- 40: Zahnsegment
- 50: Ritzel
- 55: Ritzeldrehachse
- 58: Zapfen
- 71: (erstes) Langloch
- 72: (zweites) Langloch
- 80: (erster) Endanschlag
- 100: Antriebsvorrichtung
- 110: Getriebemotor
- 112: Getriebegehäuse
- 120: Übertragungsrohr
- 140: erstes Antriebsgehäuse
- 142: Gehäuseplatte
- 144: Bolzen
- 150: zweites Antriebsgehäuse
- 152: Gehäuseplatte
- 154: Bolzen
- 156: (zweiter) Endanschlag
- 160: Vorspanneinheit
- 162: Schieber
- 164: Feder
- 166: Stützzapfen
- 170: Adapter
- 180: Anschlagbolzen
- 182: (dritter) Endanschlag
- I: erstes Drehgelenk
- II: zweites Drehgelenk
- III: drittes Drehgelenk
- IV: viertes Drehgelenk
- V: fünftes Drehgelenk
- x: Längsrichtung
- y: Querrichtung
- z: Vertikalrichtung

## Patentansprüche

1. Fahrzeugsitz (1) mit einer Höheneinstellkinematik (5), die Höheneinstellkinematik (5) aufweisend auf jeder von zwei in einer Querrichtung (y) versetzt zueinander angeordneten Sitzseiten jeweils eine Viergelenkanordnung (I, II, III, IV) und einen Einstellarm (30), jede der beiden Viergelenkanordnungen (I, II, III, IV) jeweils aufweisend eine Basis (3), ein Seitenteil (11), eine vordere Schwinge (7) und eine hintere Schwinge (9) als Getriebeglieder der Viergelenkanordnung (I, II, III, IV), wobei ein erstes Drehgelenk (I) die Basis (3) schwenkbar mit der hinteren Schwinge (9) verbindet, ein zweites Drehgelenk (II) die hintere Schwinge (9) schwenkbar mit dem Seitenteil (11) verbindet, ein drittes Drehgelenk (III) das Seitenteil (11) schwenkbar mit der vorderen Schwinge (7) verbindet, und ein viertes Drehgelenk (IV) die vordere Schwinge (7) schwenkbar mit der Basis (3) verbindet, wobei jeder der beiden Viergelenkanordnungen (I, II, III, IV) jeweils mittels einem der beiden Einstellarme (30) einstellbar ist, wobei eine Antriebsvorrichtung (100), aufweisend genau einen Getriebemotor (110), die beiden Einstellarme (30) antreibt,
wobei wenigstens eine der beiden vorderen Schwingen (7) ein Langloch (71) aufweist, in dem ein Zapfen (58) angeordnet ist, wobei der Zapfen (58) und das Langloch (71) einen Endanschlag (80) für die Höheneinstellkinematik (5) bilden, und/oder
wenigstens eine der beiden hinteren Schwingen (9) ein Langloch (72) aufweist, in dem ein Anschlagbolzen (180) angeordnet ist, wobei der Anschlagbolzen (180) und das Langloch (72) einen Endanschlag (182) für die Höheneinstellkinematik (5) bilden.

2. Fahrzeugsitz (1) nach Anspruch 1, **dadurch gekennzeichnet, dass** jeder der beiden Einstellarme (30) einerseits schwenkbar mit einem der Koppelglieder der Viergelenkanordnung (I, II, III, IV), und andererseits jeweils ein Zahnsegment (40) eines jeden Einstellarms (30) mit jeweils einem Ritzel (50) von zwei Ritzeln (50) der Antriebsvorrichtung (100) in Zahneingriff ist, wobei die beiden Ritzel (50) um eine Ritzeldrehachse (55) drehbar von dem Getriebemotor (110) antreibbar sind, und die Ritzeldrehachse (55) ortsfest zu einem weiteren Getriebeglied der Viergelenkanordnung (I, II, III, IV), insbesondere ortsfest zu dem Seitenteil (11), angeordnet ist.

3. Fahrzeugsitz (1) nach Anspruch 2, **dadurch gekennzeichnet, dass** jeder der beiden Einstellarme (30) schwenkbar mit der jeweils zugeordneten hinteren Schwinge (9) verbunden ist.

4. Fahrzeugsitz (1) nach Anspruch 2 oder 3, **dadurch gekennzeichnet, dass** die Ritzeldrehachse (55) ortsfest zu den Seitenteilen (11) angeordnet ist.

5. Fahrzeugsitz (1) nach einem der Ansprüche 1 bis 4, **dadurch gekennzeichnet, dass** der Getriebemotor (110) näher an einer der beiden Sitzseiten als an der anderen der beiden Sitzseiten angeordnet ist.

6. Fahrzeugsitz (1) nach einem der Ansprüche 1 bis 5, **dadurch gekennzeichnet, dass** an einem ersten Ende einer Ausgangswelle des Getriebemotors (110) eines der beiden Ritzel (50) befestigt ist, und mit einem zweiten Ende der Ausgangswelle ein Übertragungsrohr (120) zur Übertragung eines Drehmoments von dem Getriebemotor (110) zu dem anderen der beiden Ritzel (50) drehfest verbunden ist.

7. Fahrzeugsitz (1) nach einem der Ansprüche 1 bis 6, **dadurch gekennzeichnet, dass** eines der beiden Ritzel (50) in einem ersten Antriebsgehäuse (140) angeordnet ist, und/oder das andere der beiden Ritzel (50) in einem zweiten Antriebsgehäuse (150) angeordnet ist.

8. Fahrzeugsitz (1) nach Anspruch 7, **dadurch gekennzeichnet, dass** das erste Antriebsgehäuse (140) und/oder das zweite Antriebsgehäuse (150) eine Gehäuseplatte (142, 152) aufweist, die in einem Abstand zu einem der beiden Seitenteile (11) an diesem Seitenteil (11) befestigt ist.

9. Fahrzeugsitz (1) nach Anspruch 8, **dadurch gekennzeichnet, dass** die Gehäuseplatte (142, 152) mittels mehrerer Bolzen (144) in einem Abstand zu einem der beiden Seitenteile (11) an diesem Seitenteil (11) befestigt ist.

10. Fahrzeugsitz (1) nach einem der Ansprüche 7 bis 9, **dadurch gekennzeichnet, dass** einer der beiden Einstellarme (30), insbesondere ein Zahnsegment (40) dieses Einstellarms (30), wenigstens teilweise durch das erste Antriebsgehäuse (140) hindurch verläuft, und/oder der andere der beiden Einstellarme (30), insbesondere ein Zahnsegment (40) dieses Einstellarms (30), wenigstens teilweise durch das zweite Antriebsgehäuse (150) hindurch verläuft.

11. Fahrzeugsitz (1) nach einem der Ansprüche 7 bis 10, **dadurch gekennzeichnet, dass** wenigstens eine der beiden vorderen Schwingen (7) wenigstens teilweise in einem der beiden Antriebsgehäuse (140, 150) angeordnet ist.

12. Fahrzeugsitz (1) nach einem der Ansprüche 1 bis 11, **dadurch gekennzeichnet, dass** wenigstens eine der beiden vorderen Schwingen (7) ein Langloch (71) aufweist, in dem ein Zapfen (58) angeordnet ist, wobei der Zapfen (58) und das Langloch (71) einen Endanschlag (80) für die Höheneinstellkinematik (5) bilden wobei ein Zapfen (58) des Ritzels (50) und das Langloch (71) einen Endanschlag (80) für die Höheneinstellkinematik (5) bilden.

13. Fahrzeugsitz (1) nach einem der Ansprüche 1 bis 12, **dadurch gekennzeichnet, dass** wenigstens eine der beiden hinteren Schwingen (9) ein Langloch (72) aufweist, in dem ein Anschlagbolzen (180) angeordnet ist, wobei der Anschlagbolzen (180) und das Langloch (72) einen Endanschlag (182) für die Höheneinstellkinematik (5) bilden, wobei der Anschlagbolzen (180) an einem Adapter (170) der Basis (3) befestigt ist.

## Claims

1. Vehicle seat (1) having height adjustment kinematics (5), the height adjustment kinematics (5) having, on each of two seat sides arranged offset with respect to each other in a transverse direction (y), in each case a four-joint arrangement (I, II, III, IV) and an adjustment arm (30), each of the two four-joint arrangements (I, II, III, IV) in each case having a base (3), a side part (11), a front link (7) and a rear link (9) as transmission members of the four-joint arrangement (I, II, III, IV), wherein a first rotary joint (I) connects the base (3) pivotably to the rear link (9), a second rotary joint (II) connects the rear link (9) pivotably to the side part (11), a third rotary joint (III) connects the side part (11) pivotably to the front link (7), and a fourth rotary joint (IV) connects the front link (7) pivotably to the base (3), wherein each of the two four-joint arrangements (I, II, III, IV) is in each case adjustable by one of the two adjustment arms (30), wherein a drive device (100) having precisely one geared motor (110) drives the two adjustment arms (30),
wherein at least one of two front links (7) has a slot (71) in which a pin (58) is arranged, wherein the pin (58) and the slot (71) form an end stop (80) for the height adjustment kinematics (5), and/or at least one of the two rear links (9) has a slot (72) in which a stop bolt (180) is arranged, wherein the stop bolt (180) and the slot (72) form an end stop (182) for the height adjustment kinematics (5).

2. Vehicle seat (1) according to Claim 1, **characterized in that** each of the two adjustment arms (30), on the one hand, is in toothed engagement pivotably with one of the coupling members of the four-joint arrangement (I, II, III, IV), and, on the other hand, in each case one toothed segment (40) of each adjustment arm (30) is in toothed engagement with in each case one pinion (50) of two pinions (50) of the drive device (100), wherein the two pinions (50) are drivable rotatably about a pinion axis of rotation (55) by the geared motor (110), and the pinion axis of rotation (55) is arranged in a fixed position with respect to a further transmission member of the four-joint arrangement (I, II, III, IV), in particular in a fixed position with respect to the side part (11).

3. Vehicle seat (1) according to Claim 2, **characterized in that** each of the two adjustment arms (30) is connected pivotably to the respectively assigned rear link (9).

4. Vehicle seat (1) according to Claim 2 or 3, **characterized in that** the pinion axis of rotation (55) is arranged in a fixed position with respect to the side parts (11).

5. Vehicle seat (1) according to one of Claims 1 to 4, **characterized in that** the geared motor (110) is arranged closer to one of the two seat sides than to the other of the two seat sides.

6. Vehicle seat (1) according to one of Claims 1 to 5, **characterized in that** one of the two pinions (50) is fastened to a first end of an output shaft of the geared motor (110), and a transmission tube (120) for transmitting a torque from the geared motor (110) to the other of the two pinions (50) is connected for conjoint rotation to a second end of the output shaft.

7. Vehicle seat (1) according to one of Claims 1 to 6, **characterized in that** one of the two pinions (50) is arranged in a first drive housing (140), and/or the other of the two pinions (50) is arranged in a second drive housing (150).

8. Vehicle seat (1) according to Claim 7, **characterized in that** the first drive housing (140) and/or the second drive housing (150) has a housing plate (142, 152) which is fastened to one of the two side parts (11) at a distance from said side part (11).

9. Vehicle seat (1) according to Claim 8, **characterized in that** the housing plate (142, 152) is fastened to one of the two side parts (11) at a distance from said side part (11) by a plurality of bolts (144).

10. Vehicle seat (1) according to one of Claims 7 to 9, **characterized in that** one of the two adjustment arms (30), in particular a toothed segment (40) of said adjustment arm (30), at least partially extends through the first drive housing (140), and/or the other of the two adjustment arms (30), in particular a toothed segment (40) of said adjustment arm (30), at least partially extends through the second drive housing (150).

11. Vehicle seat (1) according to one of Claims 7 to 10, **characterized in that** at least one of the two front links (7) is at least partially arranged in one of the two drive housings (140, 150).

12. Vehicle seat (1) according to one of Claims 1 to 11, **characterized in that** at least one of two front links (7) has a slot (71) in which a pin (58) is arranged, wherein the pin (58) and the slot (71) form an end stop (80) for the height adjustment kinematics (5), wherein a pin (58) of the pinion (50) and the slot (71) form an end stop (80) for the height adjustment kinematics (5).

13. Vehicle seat (1) according to one of Claims 1 to 12, **characterized in that** at least one of the two rear links (9) has a slot (72) in which a stop bolt (180) is arranged, wherein the stop bolt (180) and the slot (72) form an end stop (182) for the height adjustment kinematics (5), wherein the stop bolt (180) is fastened to an adapter (170) of the base (3) .

## Revendications

1. Siège de véhicule (1) avec un élément cinématique de réglage de hauteur (5), l'élément cinématique de réglage de hauteur (5) comportant respectivement, sur chacun des deux côtés de siège disposés de façon décalée l'un par rapport à l'autre, dans une direction transversale (y), un dispositif à quatre articulations (1, II, III, IV) et un bras de réglage (30), chacun des deux dispositifs à quatre articulations (1, II, III, IV) comportant respectivement une base (3), une partie latérale (11), une bielle avant (7) et une bielle arrière (9) servant de maillons de transmission du dispositif à quatre articulations (1, II, III, IV), une première articulation rotative (1) reliant la base (3) de façon à pouvoir pivoter avec la bielle arrière (9), une deuxième articulation rotative (II) reliant la bielle arrière (9) de façon à pouvoir pivoter avec la partie latérale (11), une troisième articulation rotative (III) reliant la partie latérale (11) de façon à pouvoir pivoter avec la bielle avant (7) et une quatrième articulation rotative (IV) reliant la bielle avant (7) de façon à pouvoir pivoter avec la base (3), chacun des deux dispositifs à quatre articulations (1, II, III, IV) pouvant respectivement être réglé à l'aide d'un des deux bras de réglage (30), un dispositif d'entraînement (100), comportant précisément un moteur d'entraînement (110), entraînant les deux bras de réglage (30) ;
au moins une des deux bielles avant (7) comportant un trou oblong (71) dans lequel un tenon (58) est disposé, le tenon (58) et le trou oblong (71) formant une butée terminale (80) pour l'élément cinématique de réglage de hauteur (5) ; et/ou
au moins une des deux bielles arrière (9) comportant un trou oblong (72) dans lequel un goujon de butée (180) est disposé, le goujon de butée (180) et le trou oblong (72) formant une butée terminale (182) pour l'élément cinématique de réglage de hauteur (5).

2. Siège de véhicule (1) selon la revendication 1, **caractérisé en ce que** chacun des deux bras de réglage (30) est d'une part disposé de façon à pouvoir pivoter avec un des maillons de couplage du dispositif à quatre articulations (1, II, III, IV), et que d'autre part respectivement un segment denté (40) de chaque bras de réglage (30) est en prise de façon dentée avec respectivement un pignon (50) parmi les deux pignons (50) du dispositif d'entraînement (100), les deux pignons (50) étant entraînés par le moteur d'entraînement (110) de façon à pouvoir pivoter autour d'un axe de rotation de pignon (55) et l'axe de rotation de pignon (55) étant disposé fixement sur place par rapport à un maillon de transmission supplémentaire du dispositif à quatre articulations (1, II, III, IV), notamment fixement sur place par rapport à la partie latérale (11).

3. Siège de véhicule (1) selon la revendication 2, **caractérisé en ce que** chacun des deux bras de réglage (30) est relié de façon à pouvoir pivoter avec la bielle arrière (9) respectivement associée.

4. Siège de véhicule (1) selon la revendication 2 ou 3, **caractérisé en ce que** l'axe de rotation de pignon (55) est disposé fixement sur place par rapport aux parties latérales (11).

5. Siège de véhicule (1) selon l'une quelconque des revendications 1 à 4, **caractérisé en ce que** le moteur d'entraînement (110) est disposé plus près d'un des deux côtés de siège que de l'autre des deux côtés de siège.

6. Siège de véhicule (1) selon l'une quelconque des revendications 1 à 5, **caractérisé en ce qu'**un des deux pignons (50) est fixé au niveau d'une première extrémité d'un arbre de sortie du moteur d'entraînement (110) et qu'un tube de transmission (120) est relié fixement en rotation à une deuxième extrémité de l'arbre de sortie en vue de transmettre un couple de rotation du moteur d'entraînement (110) à l'autre des deux pignons (50).

7. Siège de véhicule (1) selon l'une quelconque des revendications 1 à 6, **caractérisé en ce qu'**un des deux pignons (50) est disposé dans un premier carter d'entraînement (140) et/ou que l'autre des deux pignons (50) est disposé dans un deuxième carter d'entraînement (150) .

8. Siège de véhicule (1) selon la revendication 7, **caractérisé en ce que** le premier carter d'entraînement (140) et/ou le deuxième carter d'entraînement (150) comporte une plaque de carter (142, 152) qui est fixée à une certaine distance des parties latérales (11) au niveau de cette partie latérale (11).

9. Siège de véhicule (1) selon la revendication 8, **caractérisé en ce que** la plaque de carter (142, 152) est fixée à l'aide de plusieurs goujons (144) à une certaine distance d'une des parties latérales (11) au niveau de cette partie latérale (11).

10. Siège de véhicule (1) selon l'une quelconque des revendications 7 à 9, **caractérisé en ce qu'**un des deux bras de réglage (30), notamment un segment denté (40) de ce bras de réglage (30), s'étend au moins en partie à travers le premier carter d'entraînement (140) et/ou que l'autre des deux bras de réglage (30), notamment un segment denté (40) de ce bras de réglage (30), s'étend au moins en partie à travers le deuxième carter d'entraînement (150).

11. Siège de véhicule (1) selon l'une quelconque des revendications 7 à 10, **caractérisé en ce qu'**au moins une des deux bielles avant (7) est disposée au moins en partie dans un des deux carters d'entraînement (140, 150).

12. Siège de véhicule (1) selon l'une quelconque des revendications 1 à 11, **caractérisé en ce qu'**au moins une des deux bielles avant (7) comporte un trou oblong (71) dans lequel un tenon (58) est disposé, le tenon (58) et le trou oblong (71) formant une butée terminale (80) pour l'élément cinématique de réglage de hauteur (5), un tenon (58) du pignon (50) et le trou oblong (71) formant une butée terminale (80) pour l'élément cinématique de réglage de hauteur (5).

13. Siège de véhicule (1) selon l'une quelconque des revendications 1 à 12, **caractérisé en ce qu'**au moins une des deux bielles arrière (9) comporte un trou oblong (72) dans lequel un goujon de butée (180) est disposé, le goujon de butée (180) et le trou oblong (72) formant une butée terminale (182) pour l'élément cinématique de réglage de hauteur (5), le goujon de butée (180) étant fixé à un adaptateur (170) de la base (3).
